# EUROPEAN PATENT SPECIFICATION

(11) **EP 3 718 900 B1**
(45) Date of publication and mention of the grant of the patent: **03.08.2022**
(21) Application number: 19209262.5
(22) Date of filing: 14.11.2019
(51) Int. Cl.: B64D 37/32, B64D 41/00, A62B 7/14

(54) **ELECTROCHEMICAL INERT GAS AND AIRCRAFT LIFE SUPPORT SYSTEM AND METHOD**
ELEKTROCHEMISCHES INERTGAS UND FLUGZEUGLEBENSERHALTUNGSSYSTEM UND -VERFAHREN
GAZ INERTE ÉLECTROCHIMIQUE ET SYSTÈME ET PROCÉDÉ DE SURVIE D'AÉRONEF

(30) Priority: 04.04.2019 US 201916375666
(43) Date of publication of application: 07.10.2020
(73) Proprietor: Hamilton Sundstrand Corporation, Charlotte, NC 28217-4578 (US)
(72) Inventor: RHEAUME, Jonathan, West Hartford, CT Connecticut 06119 (US); COCKS, Peter AT, South Glastonbury, CT Connecticut 06073 (US); MURPHY, John S., Wilbraham, MA Massachusetts 01095 (US)
(74) Representative: Dehns

(56) References cited:
- EP-A1- 3 284 676
- WO-A2-2005/084166
- WO-A2-2008/138930
- GB-A- 2 240 722

## Description

Exemplary embodiments pertain generally to the generation of oxygen and, more specifically to an on-board system for providing oxygen to aircraft occupants.

On-board oxygen generating systems (OBOGS) are used in aircraft to generate oxygen-enriched air during flight. EP 3 284 676 A1 includes an on-board aircraft dried inert gas system with a source inert gas containing water, an air cycle or vapor cycle cooling system, and a heat exchanger condenser having a heat absorption side in thermal communication with the air cycle or vapor cycle cooling system. Oxygen from the OBOGS may be channeled through a regulator for use as breathing air by pilots and/or other on-board occupants. Onboard oxygen gas generating systems typically use pressure swing adsorption-based gas separators. Such separators contain a molecular sieve that is permeable to oxygen, but relatively impermeable to nitrogen and water molecules. A pressure differential across the molecular sieve causes oxygen molecules from air on the inlet side of the oxygen concentrator to pass through a molecular sieve such as a zeolite bed, thereby forming oxygen-enriched air (OEA) on the low-pressure side of the oxygen concentrator. Nitrogen and water vapor are reversibly adsorbed on the surface of the molecular sieve which must be periodically regenerated. The requirement for a pressure differential necessitates a source of compressed or pressurized air, which is often satisfied with bleed air from a gas turbine aircraft engine that can impose a drain on the engine and an associated cost of extra fuel.

### BRIEF DESCRIPTION

A system is disclosed for aircraft life support and generating inert gas as defined by claim 1.

In some aspects, the aircraft occupant breathing device can include a breathing mask including a cavity in fluid communication with the oxygen gas flow path.

In any one or combination of the above aspects, the oxygen gas flow path can include a pressure regulator.

In any one or combination of the above aspects, the oxygen gas flow path can include a water-removal device.

In any one or combination of the above aspects, the oxygen gas flow path can include a thermal control device.

In any one or combination of the above aspects, the oxygen gas flow path can include an oxygen gas storage tank.

In any one or combination of the above aspects, the system can further include an environmental control system that provides compressed air to an occupant area of the aircraft.

In any one or combination of the above aspects, the system can further include an oxygen storage tank that supplies oxygen to the aircraft occupant breathing device in response to decompression of the occupant area of the aircraft.

DELETED

In any one or combination of the above aspects, the controller can be configured to operate the life support system in the first mode under normal aircraft operating conditions, and to operate the life support system in the second mode in response to a demand for emergency electrical power.

Also disclosed is a method of providing life support and generating inerting gas on an aircraft as defined by claim 7.

In any one or combination of the above aspects, the aircraft occupant breathing device comprises a breathing mask including a cavity in fluid communication with the oxygen gas transferred from the anode.

In any one or combination of the above aspects, the method can further include regulating pressure of the oxygen gas.

In any one or combination of the above aspects, the method can further include removing water from the oxygen gas.

In any one or combination of the above aspects, the method can further include controlling a temperature or humidity of the oxygen gas.

In any one or combination of the above aspects, the method can further include transferring oxygen gas from the anode to an oxygen gas storage tank and transferring oxygen gas from the oxygen gas storage tank to the aircraft occupant breathing device.

In any one or combination of the above aspects, the method can further include delivering compressed air from an environmental control system an occupant area of the aircraft.

In any one or combination of the above aspects, the method can further include transferring oxygen gas from an oxygen storage tank to the aircraft occupant breathing device in response to decompression of the occupant area of the aircraft.

DELETED

In any one or combination of the above aspects, the method can further include operating in the first mode under normal aircraft operating conditions, and operating in the second mode in response to a demand for emergency electrical power.

### BRIEF DESCRIPTION OF THE DRAWINGS

The following descriptions should not be considered limiting in any way. With reference to the accompanying drawings, like elements are numbered alike:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic depiction an example embodiment of an electrochemical cell;
FIG. 3 is a schematic illustration of an example embodiment of an electrochemical life support system and inert gas-generating system;
FIG. 4 is a schematic illustration of an example embodiment of an environmental control system;
FIG. 5 is a schematic illustration of another example embodiment of an electrochemical life support system and inert gas-generating system; and
FIG. 6 is a schematic illustration of another example embodiment of an electrochemical life support system and inert gas-generating system.

### DETAILED DESCRIPTION

A detailed description of one or more embodiments of the disclosed apparatus and method are presented herein by way of exemplification and not limitation with reference to the Figures.

Although shown and described above and below with respect to an aircraft, configurations of the present disclosure are applicable to on-board systems for any type of vehicle or for on-site installation in fixed systems. For example, military vehicles, heavy machinery vehicles, sea craft, ships, submarines, etc., may benefit from implementation of configurations of the present disclosure. For example, aircraft and other vehicles having fire suppression systems, emergency power systems, and other systems that may include electrochemical systems and may include the redundant systems described herein.

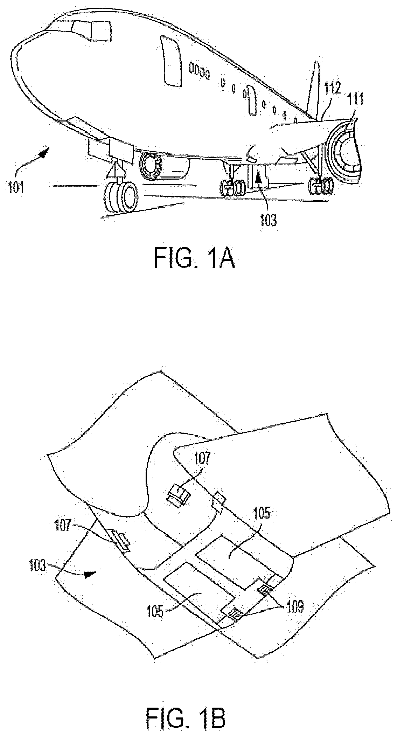

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems (ECS) and/or on-board oxygen generating systems (OBOGS) within the bay 103. As shown in FIG. 1B, the bay 103 includes bay doors 105 that enable installation and access to one or more components (e.g., OBOGS, ECS, fuel inerting systems, etc.). It should be noted that FIGS. 1A-1B are conceptual in nature, and that actual aircraft using OBOGS (e.g., military aircraft) may be configured differently. During operation of environmental control systems and/or fuel inerting systems of the aircraft, air that is external to the aircraft can flow into one or more inlets such as air inlets 107, or air can also be drawn from bypass ducts in a gas turbine engine. The outside air may then be directed to various system components (e.g., environmental conditioning system (ECS) heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to OBOGS, ECS, and/or fuel inerting systems, as will be appreciated by those of skill in the art.

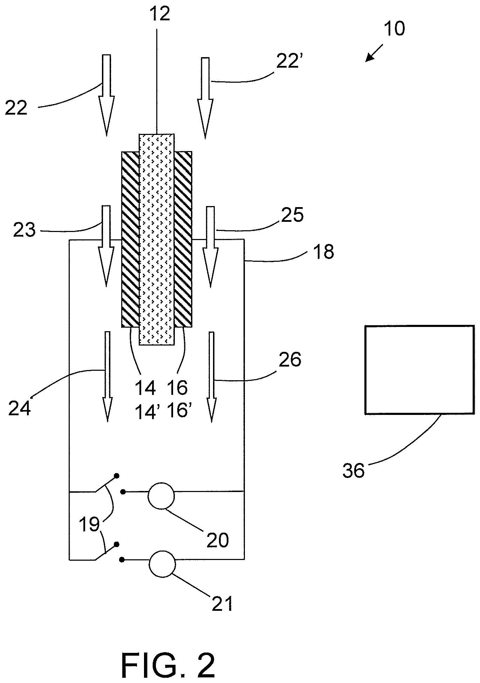

Referring now to FIG. 2, an electrochemical cell is schematically depicted. The electrochemical cell 10 comprises a separator 12 that includes an ion transfer medium. As shown in FIG. 2, the separator 12 has a cathode 14 disposed on one side and an anode 16 disposed on the other side. Cathode 14 and anode 16 can be fabricated from catalytic materials suitable for performing the needed electrochemical reaction (e.g., the oxygen-reduction reaction at the cathode and an oxidation reaction at the anode). Exemplary catalytic materials include, but are not limited to, nickel, platinum, palladium, rhodium, carbon, gold, tantalum, titanium, tungsten, ruthenium, iridium, osmium, zirconium, alloys thereof, and the like, as well as combinations of the foregoing materials. Cathode 14 and anode 16, including catalyst 14' and catalyst 16', are positioned adjacent to, and preferably in contact with the separator 12 and can be porous metal layers deposited (e.g., by vapor deposition) onto the separator 12, or can have structures comprising discrete catalytic particles adsorbed onto a porous substrate that is attached to the separator 12. Alternatively, the catalyst particles can be deposited on high surface area powder materials (e.g., graphite or porous carbons or metal-oxide particles) and then these supported catalysts may be deposited directly onto the separator 12 or onto a porous substrate that is attached to the separator 12. Adhesion of the catalytic particles onto a substrate may be by any method including, but not limited to, spraying, dipping, painting, imbibing, vapor depositing, combinations of the foregoing methods, and the like. Alternately, the catalytic particles may be deposited directly onto opposing sides of the separator 12. In either case, the cathode and anode layers 14 and 16 may also include a binder material, such as a polymer, especially one that also acts as an ionic conductor such as anion-conducting ionomers. In some embodiments, the cathode and anode layers 14 and 16 can be cast from an "ink," which is a suspension of supported (or unsupported) catalyst, binder (e.g., ionomer), and a solvent that can be in a solution (e.g., in water or a mixture of alcohol(s) and water) using printing processes such as screen printing or ink jet printing.

The cathode 14 and anode 16 can be controllably electrically connected by electrical circuit 18 to a controllable electric power system 20, which can include a power source (e.g., DC power rectified from AC power produced by a generator powered by a gas turbine engine used for propulsion or by an auxiliary power unit) and optionally a power sink 21. In some embodiments, the electric power system 20 can optionally include a connection to the electric power sink 21 (e.g., one or more electricity-consuming systems or components onboard the vehicle) with appropriate switching (e.g., switches 19), power conditioning, or power bus(es) for such on-board electricity-consuming systems or components, for optional operation in an alternative fuel cell mode.

With continued reference to FIG. 2, a cathode supply fluid flow path 22 directs gas from an air source (not shown) into contact with the cathode 14. Oxygen is electrochemically depleted from air along the cathode fluid flow path 23, and can be exhausted to the atmosphere or discharged as nitrogen-enriched air (NEA) (i.e., oxygen-depleted air, ODA) to an inerting gas flow path 24 for delivery to an on-board fuel tank (not shown), or to a vehicle fire suppression system associated with an enclosed space (not shown), or controllably to either or both of a vehicle fuel tank or an on-board fire suppression system. An anode fluid flow path 25 is configured to controllably receive an anode supply fluid from an anode supply fluid flow path 22'. The anode fluid flow path 25 includes water when the electrochemical cell is operated in an electrolytic mode to produce protons at the anode for proton transfer across the separator 12 (e.g., a proton transfer medium such as a proton exchange membrane (PEM) electrolyte or phosphoric acid electrolyte). If the system is configured for alternative operation in a fuel cell mode, the anode fluid flow path 25 can be configured to controllably also receive fuel (e.g., hydrogen). The protons formed by electrolysis of water are transported across the separator 12 to the cathode 14, leaving oxygen on the anode fluid flow path, which is exhausted through an anode exhaust 26 Control of fluid flow along these flow paths can be provided through conduits and valves (not shown), which can be controlled by a controller 36 including a microprocessor programmed to carry out the control operations and parameters described herein.

Exemplary materials from which the electrochemical proton transfer medium can be fabricated include proton-conducting ionomers and ion-exchange resins. Ion-exchange resins useful as proton conducting materials include hydrocarbon- and fluorocarbon-type resins. Fluorocarbon-type resins typically exhibit excellent resistance to oxidation by halogen, strong acids, and bases. One family of fluorocarbon-type resins having sulfonic acid group functionality is NAFION^{™} resins (commercially available from E. I. du Pont de Nemours and Company, Wilmington, Del.). Alternatively, instead of an ion-exchange membrane, the separator 12 can be comprised of a liquid electrolyte, such as sulfuric or phosphoric acid, which may preferentially be absorbed in a porous-solid matrix material such as a layer of silicon carbide or a polymer than can absorb the liquid electrolyte, such as poly(benzoxazole). These types of alternative "membrane electrolytes" are well known and have been used in other electrochemical cells, such as phosphoric-acid fuel cells.

During operation of a proton transfer electrochemical cell in the electrolytic mode, water at the anode undergoes an electrolysis reaction according to the formula

H₂O → ½O₂ + 2H⁺ + 2e (1)

The electrons produced by this reaction are drawn from electrical circuit 18 powered by electric power source 20 connecting the positively charged anode 16 with the cathode 14. The hydrogen ions (i.e., protons) produced by this reaction migrate across the separator 12, where they react at the cathode 14 with oxygen in the cathode flow path 23 to produce water according to the formula

½O₂ + 2H⁺ + 2e⁻ → H₂O (2)

Removal of oxygen from cathode flow path 23 produces nitrogen-enriched air exiting the region of the cathode 14. The oxygen evolved at the anode 16 by the reaction of formula (1) is discharged as oxygen or an oxygen-enriched air stream as anode exhaust 26.

During operation of a proton transfer electrochemical cell in a fuel cell mode, fuel (e.g., hydrogen) at the anode undergoes an electrochemical oxidation according to the formula:

H₂ → 2H⁺ + 2e (3)

The electrons produced by this reaction flow through electrical circuit 18 to provide electric power to the electric power sink 21. The hydrogen ions (i.e., protons) produced by this reaction migrate across the separator 12, where they react at the cathode 14 with oxygen in the cathode flow path 23 to produce water according to the formula (2).

½O₂ + 2H⁺ + 2e⁻ → H₂O (2)

Removal of oxygen from cathode flow path 23 produces nitrogen-enriched air exiting the region of the cathode 14.

As mentioned above, the electrolysis reaction occurring at the positively charged anode 16 requires water, and the ionic polymers used for a PEM electrolyte perform more effectively in the presence of water. Accordingly, in some embodiments, a PEM membrane electrolyte is saturated with water or water vapor. Although the reactions (1) and (2) are stoichiometrically balanced with respect to water so that there is no net consumption of water, in practice some amount of moisture will be removed through the cathode exhaust 24 and/or the anode exhaust 26 (either entrained or evaporated into the exiting gas streams). Accordingly, in some exemplary embodiments, water from a water source is circulated past the anode 16 along an anode fluid flow path (and optionally also past the cathode 14). Such water circulation can also provide cooling for the electrochemical cells. In some exemplary embodiments, water can be provided at the anode from humidity in air along an anode fluid flow path in fluid communication with the anode. In other embodiments, the water produced at cathode 14 can be captured and recycled to anode 16 (e.g., through a water circulation loop, not shown). It should also be noted that, although the embodiments are contemplated where a single electrochemical cell is employed, in practice multiple electrochemical cells will be electrically connected in series with fluid flow to the multiple cathode and anode flow paths routed through manifold assemblies.

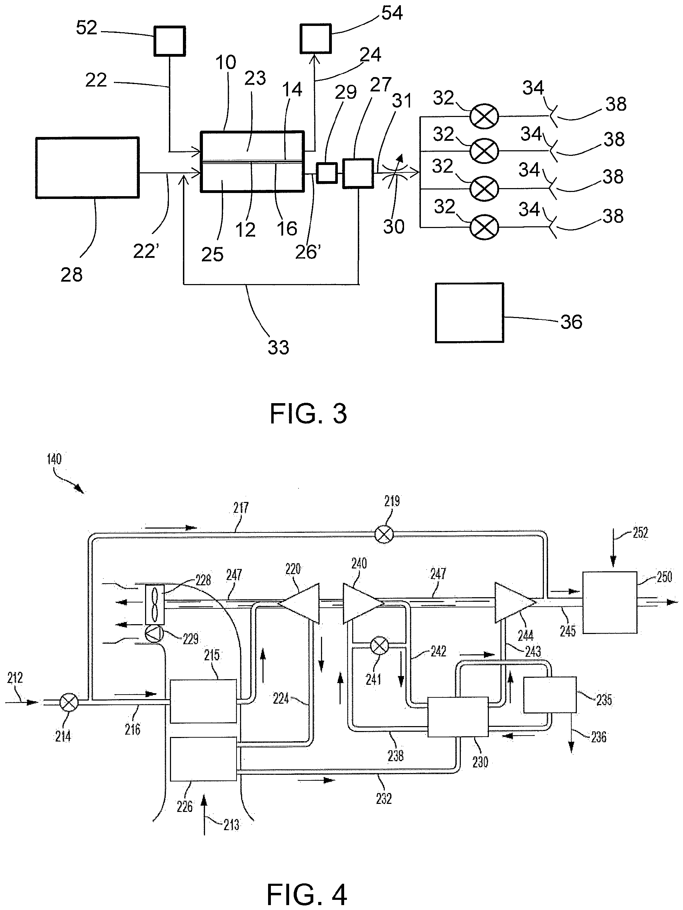

An example embodiment of an aircraft life support system that utilizes oxygen from an electrochemical cell 10 is schematically shown in FIG. 3. As shown in FIG. 3, water from a water source 28 is directed (e.g., by a pump, not shown) along the anode supply fluid flow path 22' to the anode fluid flow path 25, where it is electrolyzed at the anode 16 to form protons and oxygen. The protons are transported across the separator 12 to the cathode 14, where they combine with oxygen from airflow along the cathode fluid flow path 23 to form water. Removal of the protons from the anode fluid flow path 25 leaves pure oxygen or oxygen-enriched gas and water on the anode fluid flow path, which is discharged as anode exhaust 26 to an oxygen fluid flow path 26'.

As further shown in FIG. 3, the oxygen fluid flow path 26' includes an optional water removal device such as a gas-liquid separator 27 and a flow control valve 30. Although water is consumed at the anode by electrolysis, the oxygen gas exiting as anode exhaust 26 can include water vapor or entrained liquid water from excess water on the anode fluid flow path 25 such as from a liquid water circulation loop. The gas-liquid separator 27 can include a tank with a liquid space and a vapor space inside, allowing for liquid water to be removed from the liquid space and transported back to the electrochemical cell 10 through water return conduit 33. Additional water removal devices can be included along the fluid flow path 26', including but not limited to a desiccant (including a desiccant wheel), a membrane drier (see, e.g., US 2019/0001264A1, a condensing heat exchanger operated at elevated pressure (see, e.g., US patent application serial no. 16,149,736, or other water removal device (e.g., gas-liquid separators such as a coalescing filter, or vortex gas-liquid separator, or an electrochemical dryer, see, e.g., US patent application serial no. 16,127,980 and US20190001264A1, and can be used to remove water vapor and entrained liquid water. All or a portion of water vapor can be removed from the oxygen gas, and can leave some residual water vapor content for occupant breathing comfort.

The oxygen gas produced at the anode 16 can also be subject to thermal management, for example to provide oxygen at a temperature suited for human breathing. In some embodiments, the oxygen gas can be thermally conditioned to provide a temperature of 5-25°C. As shown in FIG. 3, a thermal control module 29 is disposed along the fluid flow path 26. The thermal control module 29 can add heat in some embodiments, but in other embodiments will provide cooling since the electrochemical cell device upstream generates heat and the effluent streams may exit at a temperature higher than desired for human consumption. Accordingly, in some embodiments, the thermal control module 29 can include a cooling heat exchanger with a heat rejection side along the fluid flow path 26' and a heat absorption side in fluid/thermal communication with a heat sink such as RAM air. Operation of the anode fluid flow path 25 at elevated pressure using equipment such as a pressure regulator (as known to skilled practitioners) can provide a technical effect of promoting condensation of water because it is easier to condense water out of a pressurized gas stream, and any water not removed by condensation at the thermal control module 29 can be removed by the optional gas-liquid separator 27. A two-step drying process can thus be used for treating the oxygen, in which a condenser is used first followed by a supplementary drying step. A condensing heat exchanger removes most water, however, in order to attain an equivalent dew point well below freezing, additional measures are necessary. First, condensing out water at elevated pressure increases the amount of water that is removed. Additional details regarding this concept can be found in the aforementioned US Patent Application 16/149,736. In addition, a supplementary step may be necessary. The supplementary step can be a desiccant, a membrane dryer, an electrochemical dryer, or any other dryer configured in series with the condenser. The thermal control module can be controlled based on output of a temperature sensor (not shown) that can be located for example on the fluid flow path 26' or the fluid flow path 31. The quantity of oxygen gas produced at the anode 16 can be controlled with any one or combination of operating parameters such as voltage, current density, catalyst choice, and water quantity available for electrolysis at the anode. Oxygen flow can also be controlled or metered with the control valve 30.

As further shown in FIG. 3, the electrochemical cell or cell stack 10 generates an inerting gas on the cathode fluid flow path 23 by depleting oxygen to produce oxygen-depleted air (ODA), also known as nitrogen-enriched air (NEA) at the cathode 14 that can be directed to a protected space 54 (e.g., a fuel tank ullage space, a cargo hold, or an equipment bay). As shown in FIG. 3, an air source 52 (e.g., ram air, compressor bleed, blower) is directed to the cathode fluid flow path 23 where oxygen is depleted by electrochemical reactions with protons that have crossed the separator 12 as well as electrons from an external circuit (not shown) to form water at the cathode 14. The ODA thereby produced can be directed to a protected space 54 such as an ullage space in in the aircraft fuel tanks as disclosed or other protected space 54. The inerting gas flow path (cathode exhaust 24) can include additional components (not shown) such as flow control valve(s), a pressure regulator or other pressure control device, and water removal device(s) such as a heat exchanger condenser, a membrane drier or other water removal device(s), or a filter or other particulate or contaminant removal devices. Additional information regarding the electrochemical production of ODA can be found in U.S. Patent 9,963,792, US Patent Application Publication No. 2017/0331131A1, and US Patent Application Serial No. 16/029,024.

As further shown in FIG. 3, the oxygen gas on the oxygen gas flow path 26' is delivered to an aircraft occupant breathing device 34. As shown in the example embodiment of FIG. 3, oxygen is delivered to four occupant breathing devices 34, but any number of breathing devices can receive the oxygen gas. In some embodiments, the occupant breathing device(s) 34 can include a breathing mask that includes a breathing cavity 38, from which an occupant wearing the mask can inhale oxygen gas supplied from the oxygen gas flow path 26'. In some embodiments, an occupant breathing device 34 has a regulator 32 associated therewith. Masks with regulators can be configured as diluter-demand for altitudes below 40,000 feet (12192 m) or as pressure-demand for altitudes above 40,000 feet (12192 m). Both configurations provide oxygen in response to inhalation by the user, with diluter-demand devices configured to increase oxygen flow in response to a decrease in ambient pressure so that the partial pressure of oxygen in the breathing cavity 38 stays relatively constant, and pressure-demand devices configured to maintain pressure in the breathing cavity at a pressure greater than ambient pressure. In some embodiments, the life support system can also include a pressurized occupant suit, which can receive pressurized air from an on-board ECS or from the oxygen gas flow path 26'.

The aircraft life support systems disclosed herein can be used in conjunction with an aircraft environmental control system or can be used as a stand-alone life-support system. Example embodiments aircraft environmental control systems utilize a source of compressed air such as bleed air from a compressor section of a gas turbine engine or air from an electrically-powered compressor, which can be cycled through an air cycle machine to produce air for occupant areas of the aircraft at a desired pressure and temperature. The aircraft life support system can allow for ECS to operate at a broader range of delivery pressures compared to pressurized aircraft that do not utilize such a system. An example embodiment of on-board ECS 140 is schematically shown in FIG. 4. Air cycle cooling system depicts a so-called "four-wheel" system, referring to the four rotating devices (a ram air fan, one compressor, and two turbines), but "three-wheel" systems having only a single turbine are also contemplated. As shown in FIG. 4, compressed air 212 from a compressed air source (not shown) such as a pre-cooled turbine engine bleed, an APU bleed, or an electrically-powered compressor is delivered through control valve 214. From there, the compressed air is directed to a heat exchanger 215 (also referred to in the art as a primary heat exchanger) where it rejects heat to ambient air flowing through or across a heat absorption side of heat exchanger 215. Cooled compressed air is discharged from heat exchanger 215 to compressor 220. A portion of the air going to heat exchanger 215 can be controllably diverted through conduit 217 and control/expansion valve 219 to mix with the outlet of turbine 244 and control the temperature of the conditioned air exiting the system. Compressor 220 compresses its portion of the air from the heat exchanger 215, which also results in heating of the air. The further compressed air is discharged from compressor 220 through conduit 224 to heat exchanger 226 (also referred to in the art as a secondary heat exchanger) where it rejects heat to ambient air flowing through or across a heat absorption side of heat exchanger 226.

The ambient air 213 flowing through or across the heat absorption sides of heat exchangers 215 and 226 can be a ram air flow from a forward-facing surface of the aircraft. In conditions under which insufficient airflow is generated by the forward motion of the aircraft for operation of the heat exchangers 215, 226, the air flow can be assisted by operation of fan 228. Check/bypass valve 229 allows for bypass of the fan 228 when ram air flow is sufficient for the needs of the heat exchangers 215 and 226. Heat exchangers 215 and 226 can share a flow path for the ambient cooling air, and can be integrated into a single unit called a dual heat exchanger. Heat exchanger 215 is sometimes referred to as a primary heat exchanger and heat exchanger 226 is sometimes referred to as a secondary heat exchanger. Cooled air discharged from heat exchanger 226 is delivered through conduit 232 to a heat rejection side of heat exchanger 230. In the heat rejection side of heat exchanger 230, the air is further cooled to a temperature at or below the dew point of the air and flows into water removal unit 235 where liquid water 236 condensed from the air is removed. The dehumidified air flows through a heat absorption side of heat exchanger 230 where it is re-heated before being delivered through conduit 238 to turbine 240, where work is extracted as the air is expanded and cooled by turbine 240. A portion of the air going to turbine 240 can be diverted by valve 241 if needed to allow the temperature of the air at the inlet to the heat absorption side of heat exchanger 230 to be above freezing. The cooled expanded air discharged from the turbine 240 is delivered through conduit 242 to a heat absorption side of heat exchanger 230 where it along with the dehumidified air discharged from water collection unit 235 provides cooling needed to condense water vapor from air on the heat rejection side of heat exchanger 230. The air streams on the heat absorption side of the heat exchanger 230 are thus reheated. Heat exchanger 230 is also sometimes referred to as a condenser/reheater, and can be integrated with water removal unit 235 in a single unit. The reheated air from conduit 242 exiting from the heat absorption side of heat exchanger 230 flows through conduit 243 to turbine 244, where it is expanded and cooled, and then discharged from the system 140 through conduit 245 to mix manifold 250 where it is mixed with cabin air 252 before being discharged to the aircraft cabin. The environment air conditioning system 140 also includes a power transfer path 247 such as a rotating shaft that transfers power to the compressor 220 and fan 228 from work extracted by turbines 240 and 244.

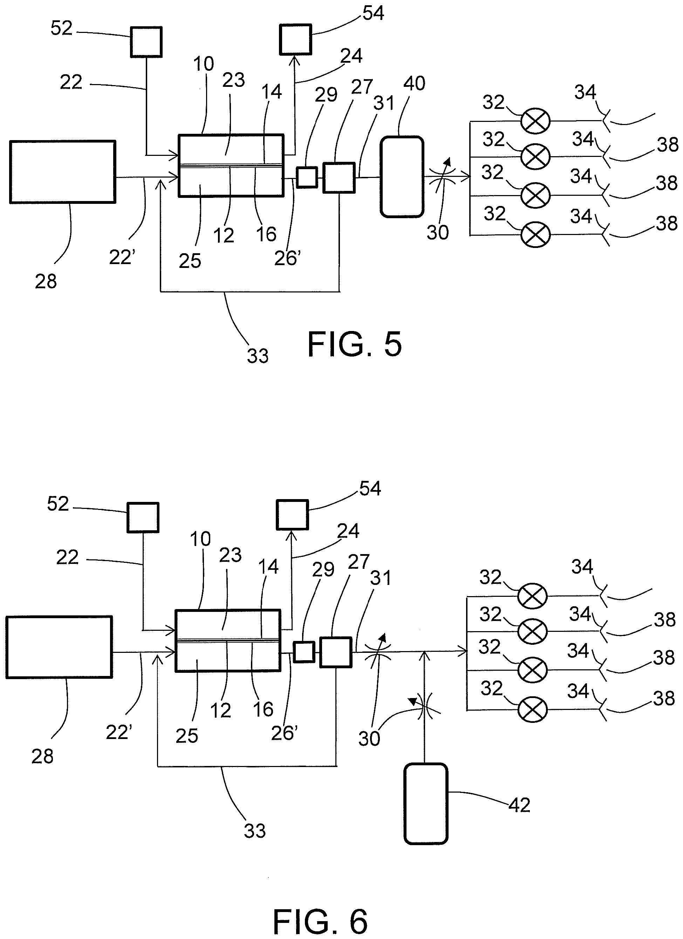

In some embodiments, an aircraft life support system can include an oxygen storage tank 40 that receives oxygen from the oxygen fluid flow path 26' and discharges oxygen to the occupant breathing device(s) 34, as shown in the example embodiment of FIG. 5. The oxygen storage tank 40 can provide a buffer capacity to provide rapid response to changes in the system demand for oxygen delivery to the occupant breathing device(s) 34 if such changes in system demand exceed the response time for the electrochemical cell 10 to change output through its operational paramaters (e.g., voltage, current density, water feed, etc.).

life support system includes an oxygen storage tank 42 as shown in FIG. 6 that can provide an alternate source of oxygen if the electrochemical cell 10 is unable to provide oxygen or is unable to meet system demand for oxygen delivery to the occupant breathing device(s) 34. In some embodiments, the oxygen storage tank 42 can contain compressed oxygen gas, and in some embodiments, the oxygen storage tank 42 can contain liquid oxygen. In either case, the oxygen storage tank 42 can be equipped with an expansion device control device (e.g., an orifice or pressure control valve) for discharge of oxygen gas at a desired pressure.

Although this disclosure includes embodiments where an electrochemical cell is utilized for producing oxygen to be delivered to occupant breathing devices and inert gas for a protected space, the electrochemical cell can also be used for other purposes. For example, in some embodiments, the electrochemical cell can be used to in an alternate mode to provide electric power for on-board vehicle or on-site power-consuming systems, as disclosed in the aforementioned US Patent Application Publication No. 2017/0331131A1. In this mode, fuel (e.g., hydrogen) is directed from a fuel source to the anode 16 where hydrogen molecules are split to form protons that are transported across the separator 12 to combine with oxygen at the cathode. Simultaneously, reduction and oxidation reactions exchange electrons at the electrodes, thereby producing electricity in an external circuit. Oxygen is not produced by the electrochemical cell in this mode, and the occupant breathing devices can be supplied with oxygen from the storage tank 42 as shown in FIG. 6. Embodiments in which these alternate modes of operation can be utilized include, for example, operating the system in alternate modes selected from a plurality of modes including a first mode of electrochemical oxygen production under normal aircraft operating conditions (e.g., in which an engine-mounted generator provides electrical power) and a second mode of electrochemical electricity production (e.g., in response to a demand for emergency electrical power such as resulting from failure of an engine-mounted generator) with oxygen provided to occupant breathing devices from oxygen storage tank 42. ODA can be produced at the cathode 14 in each of these alternate modes of operation.

In some embodiments, the on-board life support system can provide oxygen according to parameters specified in United States Department of Defense standard MIL-STD-3050 (May 11, 2015).

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. An aircraft life support and inert gas generating system, comprising:
an electrochemical cell (10) comprising a cathode (14) and an anode (16) separated by a separator (12) comprising a proton transfer medium;
a cathode fluid flow path (23) in operative fluid communication with the cathode between a cathode fluid flow path inlet and a cathode fluid flow path outlet;
a cathode supply fluid flow path (22) between an air source and the cathode fluid flow path inlet, and an inerting gas flow path in operative fluid communication with the cathode fluid flow path outlet and a protected space;
an anode fluid flow path (25) in operative fluid communication with the anode, including an anode fluid flow path outlet;
an anode supply fluid flow path (22') between a water source (28) and the anode fluid flow path inlet, and an oxygen gas flow path in operative fluid communication with the anode fluid flow path outlet and an aircraft occupant breathing device (34);
an electrical connection between a power source and the electrochemical cell;
an oxygen storage tank (42) and a fluid flow path from the oxygen storage tank to the aircraft occupant breathing device (34);
a hydrogen source in fluid communication with the anode fluid flow path inlet;
an electrical connection between the electrochemical cell and a power sink; and
a controller (36) configured to alternatively operate the life support system in alternate modes of operation selected from a plurality of modes including:
a first mode in which water is directed to the anode fluid flow path inlet, electric power is directed from the power source to the electrochemical cell to provide a voltage difference between the anode and the cathode, and oxygen gas is directed from the anode fluid flow path outlet to the aircraft occupant breathing device, and
a second mode in which hydrogen is directed from the hydrogen source to the anode fluid flow path inlet, electric power is directed from the electrochemical cell to the power sink, and oxygen gas is directed from the oxygen storage tank to the aircraft occupant breathing device.

2. The aircraft life support system of claim 1, wherein the aircraft occupant breathing device comprises a breathing mask including a cavity (38) in fluid communication with the oxygen gas flow path.

3. The aircraft life support system of claim 1 or 2, wherein the oxygen gas flow path includes a pressure regulator (32), and/or wherein the oxygen gas flow path includes a water-removal device (235), and/or wherein the oxygen gas flow path includes a thermal control device (29), and/or wherein the oxygen gas flow path includes an oxygen gas storage tank (40).

4. The aircraft life support system of any preceding claim, further comprising an environmental control system (140) that provides compressed air to an occupant area of the aircraft.

5. The aircraft life support system of any preceding claim, wherein the oxygen storage tank (42) supplies oxygen to the aircraft occupant breathing device in response to decompression of the occupant area of the aircraft.

6. The aircraft life support system of claim 1, wherein the controller is configured to operate the life support system in the first mode under normal aircraft operating conditions, and to operate the life support system in the second mode in response to a demand for emergency electrical power.

7. A method of providing life support and generating inerting gas on an aircraft, comprising:
delivering water to an anode of an electrochemical cell comprising the anode and a cathode separated by a separator comprising a proton transfer medium;
applying a voltage difference between the anode and the cathode to electrolyze water at the anode to form protons and oxygen;
transferring the oxygen gas from the anode to an aircraft occupant breathing device;
delivering air to the cathode and transferring the protons across the separator to the cathode, and reducing oxygen at the cathode to generate oxygen-depleted air;
directing the oxygen-depleted air from the cathode of the electrochemical cell along an inerting gas flow path to the protected space; **characterized by**
operating in alternate modes of operation including:
a first mode in which water is directed to the anode, electric power is directed from a power source to the electrochemical cell to provide a voltage difference between the anode and the cathode, and oxygen gas is directed from the anode to the aircraft occupant breathing device, and
a second mode in which hydrogen is directed from a hydrogen source to the anode, electric power is directed from the electrochemical cell to a power sink, and oxygen gas is directed from an oxygen storage tank to the aircraft occupant breathing device.

8. The method of claim 7, wherein the aircraft occupant breathing device comprises a breathing mask including a cavity in fluid communication with the oxygen gas transferred from the anode.

9. The method of claim 7 or 8, further comprising regulating pressure of the oxygen gas, and/or further comprising removing water from the oxygen gas, and/or further comprising controlling a temperature or humidity of the oxygen gas, and/or further comprising transferring oxygen gas from the anode to an oxygen gas storage tank and transferring oxygen gas from the oxygen gas storage tank to the aircraft occupant breathing device, and/or further comprising delivering compressed air from an environmental control system to an occupant area of the aircraft.

10. The method of claim 7, further comprising operating in the first mode under normal aircraft operating conditions, and operating in the second mode in response to a demand for emergency electrical power.

## Patentansprüche

1. Flugzeuglebenserhaltungs- und Inertgaserzeugungssystem, umfassend:
eine elektrochemische Zelle (10), die eine Kathode (14) und eine Anode (16) umfasst, die durch einen Separator (12) getrennt sind, der ein Protonenübertragungsmedium umfasst;
einen Kathodenfluid-Strömungsweg (23) in operativer Fluidverbindung mit der Kathode zwischen einem Kathodenfluid-Strömungswegeinlass und einem Kathodenfluid-Strömungswegauslass;
einen Kathodenfluid-Versorgungströmungsweg (22) zwischen einer Luftquelle und dem Kathodenfluid-Strömungswegeinlass und einen Inertgasströmungsweg in operativer Fluidverbindung mit dem Kathodenfluid-Strömungswegauslass und einem geschützten Raum;
einen Anodenfluid-Strömungsweg (25) in operativer Fluidverbindung mit der Anode, einschließlich eines Anodenfluid-Strömungswegauslasses;
einen Anodenfluid-Versorgungsströmungsweg (22') zwischen einer Wasserquelle (28) und dem Anodenfluid-Strömungswegeinlass und einen Sauerstoffgas-Strömungsweg in operativer Fluidverbindung mit dem Anodenfluid-Strömungswegauslass und einer Flugzeuginsassen-Atemvorrichtung (34);
eine elektrische Verbindung zwischen einer Stromquelle und der elektrochemischen Zelle;
einen Sauerstoffspeichertank (42) und einen Fluidströmungsweg von dem Sauerstoffspeichertank zu der Flugzeuginsassen-Atemvorrichtung (34);
eine Wasserstoffquelle in Fluidverbindung mit dem Anodenfluid-Strömungswegeinlass;
eine elektrische Verbindung zwischen der elektrochemischen Zelle und einer Leistungssenke; und
eine Steuerung (36), die dazu konfiguriert ist, das Lebenserhaltungssystem alternativ in alternativen Betriebsmodi zu betreiben, die aus einer Vielzahl von Modi ausgewählt sind, einschließlich:
eines ersten Modus, in dem Wasser zu dem Anodenfluid-Strömungswegeinlass geleitet wird, elektrische Energie von der Stromquelle zu der elektrochemischen Zelle geleitet wird, um eine Spannungsdifferenz zwischen der Anode und der Kathode bereitzustellen, und Sauerstoffgas von dem Anodenfluid-Strömungswegauslass zu der Flugzeuginsassen-Atemvorrichtung geleitet wird, und
eines zweiten Modus, in dem Wasserstoff von der Wasserstoffquelle zu dem Anodenfluid-Strömungswegeinlass geleitet wird, elektrische Energie von der elektrochemischen Zelle zu der Leistungssenke geleitet wird und Sauerstoffgas von dem Sauerstoffspeichertank zu der Flugzeuginsassen-Atemvorrichtung geleitet wird.

2. Flugzeuglebenserhaltungssystem nach Anspruch 1, wobei die Flugzeuginsassen-Atemvorrichtung eine Atemmaske mit einem Hohlraum (38) in Fluidverbindung mit dem Sauerstoffgas-Strömungsweg umfasst.

3. Flugzeuglebenserhaltungssystem nach Anspruch 1 oder 2, wobei der Sauerstoffgas-Strömungsweg einen Druckregler (32) aufweist und/oder wobei der Sauerstoffgas-Strömungsweg eine Wasserentfernungsvorrichtung (235) aufweist und/oder wobei der Sauerstoffgas-Strömungsweg eine Wärmesteuervorrichtung (29) aufweist und/oder wobei der Sauerstoffgas-Strömungsweg einen Sauerstoffgasspeichertank (40) aufweist.

4. Flugzeuglebenserhaltungssystem nach einem der vorhergehenden Ansprüche, das ferner ein Umgebungssteuersystem (140) umfasst, das Druckluft an einen Insassenbereich des Flugzeugs liefert.

5. Flugzeuglebenserhaltungssystem nach einem der vorhergehenden Ansprüche, wobei der Sauerstoffspeichertank (42) als Reaktion auf die Dekompression des Insassenbereichs des Flugzeugs die Flugzeuginsassen-Atemvorrichtung mit Sauerstoff versorgt.

6. Flugzeuglebenserhaltungssystem nach Anspruch 1, wobei die Steuerung dazu konfiguriert ist, das Lebenserhaltungssystem unter normalen Flugzeugbetriebsbedingungen im ersten Modus zu betreiben und das Lebenserhaltungssystem als Reaktion auf eine Anforderung von Notstrom im zweiten Modus zu betreiben.

7. Verfahren zum Bereitstellen von Lebenserhaltung und zum Erzeugen von Inertgas in einem Flugzeug, umfassend:
Zuführen von Wasser zu einer Anode einer elektrochemischen Zelle, die die Anode und eine Kathode umfasst, die durch einen Separator getrennt sind, der ein Protonenübertragungsmedium umfasst;
Anlegen einer Spannungsdifferenz zwischen der Anode und der Kathode, um Wasser an der Anode zu elektrolysieren, um Protonen und Sauerstoff zu bilden;
Übertragen des Sauerstoffgases von der Anode zu einer Flugzeuginsassen-Atemvorrichtung:
Zuführen von Luft zu der Kathode und Übertragen der Protonen über den Separator zu der Kathode und Reduzieren von Sauerstoff an der Kathode, um sauerstoffabgereicherte Luft zu erzeugen;
Leiten der sauerstoffabgereicherten Luft von der Kathode der elektrochemischen Zelle entlang eines Inertgas-Strömungswegs zu dem geschützten Raum; **gekennzeichnet durch**
Betreiben in alternativen Betriebsmodi, einschließlich:
eines ersten Modus, in dem Wasser zu der Anode geleitet wird, elektrische Energie von einer Stromquelle zu der elektrochemischen Zelle geleitet wird, um eine Spannungsdifferenz zwischen der Anode und der Kathode bereitzustellen, und Sauerstoffgas von der Anode zu der Flugzeuginsassen-Atemvorrichtung geleitet wird, und
eines zweiten Modus, in dem Wasserstoff von einer Wasserstoffquelle zu der Anode geleitet wird, elektrische Energie von der elektrochemischen Zelle zu einer Leistungssenke geleitet wird und Sauerstoffgas von einem Sauerstoffspeichertank zu der Flugzeuginsassen-Atemvorrichtung geleitet wird.

8. Verfahren nach Anspruch 7, wobei die Flugzeuginsassen-Atemvorrichtung eine Atemmaske mit einem Hohlraum in Fluidverbindung mit dem Sauerstoffgas, das von der Anode übertragen wird, umfasst.

9. Verfahren nach Anspruch 7 oder 8, ferner umfassend das Regulieren des Drucks des Sauerstoffgases und/oder ferner umfassend das Entfernen von Wasser aus dem Sauerstoffgas und/oder ferner umfassend das Steuern einer Temperatur oder Feuchtigkeit des Sauerstoffgases und/oder ferner umfassend das Übertragen von Sauerstoffgas von der Anode zu einem Sauerstoffgasspeichertank und das Übertragen von Sauerstoffgas von dem Sauerstoffgasspeichertank zu der Flugzeuginsassen-Atemvorrichtung und/oder ferner umfassend das Zuführen von Druckluft von einem Umgebungssteuersystem zu einem Insassenbereich des Flugzeugs.

10. Verfahren nach Anspruch 7, ferner umfassend das Betreiben im ersten Modus unter normalen Flugzeugbetriebsbedingungen und das Betreiben im zweiten Modus als Reaktion auf eine Anforderung von Notstrom.

## Revendications

1. Système de survie d'aéronef et de génération de gaz inerte, comprenant :
une cellule électrochimique (10) comprenant une cathode (14) et une anode (16) séparées par un séparateur (12) comprenant un milieu de transfert de protons ;
un trajet d'écoulement de fluide de cathode (23) en communication fluidique fonctionnelle avec la cathode entre une entrée de trajet d'écoulement de fluide de cathode et une sortie de trajet d'écoulement de fluide de cathode ;
un trajet d'écoulement de fluide d'alimentation de cathode (22) entre une source d'air et l'entrée de trajet d'écoulement de fluide de cathode, et un trajet d'écoulement de gaz d'inertage en communication fluidique fonctionnelle avec la sortie de trajet d'écoulement de fluide de cathode et un espace protégé ;
un trajet d'écoulement de fluide d'anode (25) en communication fluidique fonctionnelle avec l'anode, comportant une sortie de trajet d'écoulement de fluide d'anode ;
un trajet d'écoulement de fluide d'alimentation d'anode (22') entre une source d'eau (28) et l'entrée de trajet d'écoulement de fluide d'anode, et un trajet d'écoulement de gaz oxygène en communication fluidique fonctionnelle avec la sortie de trajet d'écoulement de fluide d'anode et un dispositif respiratoire d'occupant d'aéronef (34) ;
une connexion électrique entre une source d'alimentation et la cellule électrochimique ;
un réservoir de stockage d'oxygène (42) et un trajet d'écoulement de fluide depuis le réservoir de stockage d'oxygène vers le dispositif respiratoire d'occupant d'aéronef (34) ;
une source d'hydrogène en communication fluidique avec l'entrée de trajet d'écoulement de fluide d'anode ;
une connexion électrique entre la cellule électrochimique et un collecteur de puissance ; et
un dispositif de commande (36) configuré pour faire fonctionner alternativement le système de survie dans des modes de fonctionnement alternatifs sélectionnés parmi une pluralité de modes comportant :
un premier mode dans lequel de l'eau est dirigée vers l'entrée de trajet d'écoulement de fluide d'anode, de l'énergie électrique est dirigée depuis la source d'alimentation vers la cellule électrochimique pour fournir une différence de tension entre l'anode et la cathode, et du gaz oxygène est dirigé depuis la sortie de trajet d'écoulement de fluide d'anode vers le dispositif respiratoire d'occupant d'aéronef, et
un second mode dans lequel de l'hydrogène est dirigé depuis la source d'hydrogène vers l'entrée de trajet d'écoulement de fluide d'anode, de l'énergie électrique est dirigée depuis la cellule électrochimique vers le collecteur d'énergie, et du gaz oxygène est dirigé depuis le réservoir de stockage d'oxygène vers le dispositif respiratoire d'occupant d'aéronef.

2. Système de survie d'aéronef selon la revendication 1, dans lequel le dispositif respiratoire d'occupant d'aéronef comprend un masque respiratoire comportant une cavité (38) en communication fluidique avec le trajet d'écoulement de gaz oxygène.

3. Système de survie d'aéronef selon la revendication 1 ou 2, dans lequel le trajet d'écoulement de gaz oxygène comporte un régulateur de pression (32), et/ou dans lequel le trajet d'écoulement de gaz oxygène comporte un dispositif d'élimination d'eau (235), et/ou dans lequel le trajet d'écoulement de gaz oxygène comporte un dispositif de commande thermique (29), et/ou dans lequel le trajet d'écoulement de gaz oxygène comporte un réservoir de stockage de gaz oxygène (40).

4. Système de survie d'aéronef selon une quelconque revendication précédente, comprenant en outre un système de contrôle environnemental (140) qui fournit de l'air comprimé à une zone d'occupant de l'aéronef.

5. Système de survie d'aéronef selon une quelconque revendication précédente, dans lequel le réservoir de stockage d'oxygène (42) fournit de l'oxygène au dispositif respiratoire d'occupant d'aéronef en réponse à la décompression de la zone d'occupant de l'aéronef.

6. Système de survie d'aéronef selon la revendication 1, dans lequel le dispositif de commande est configuré pour faire fonctionner le système de survie dans le premier mode dans des conditions de fonctionnement d'aéronef normales, et pour faire fonctionner le système de survie dans le second mode en réponse à une demande d'énergie électrique d'urgence.

7. Procédé de survie et de génération de gaz d'inertage sur un aéronef, comprenant :
la fourniture d'eau à une anode d'une cellule électrochimique comprenant l'anode et une cathode séparées par un séparateur comprenant un milieu de transfert de protons ;
l'application d'une différence de tension entre l'anode et la cathode pour électrolyser de l'eau au niveau de l'anode pour former des protons et de l'oxygène ;
le transfert du gaz oxygène depuis l'anode vers un dispositif respiratoire d'occupant d'aéronef :
la fourniture d'air à la cathode et le transfert des protons à travers le séparateur vers la cathode, et la réduction d'oxygène au niveau de la cathode pour générer de l'air appauvri en oxygène ;
l'orientation de l'air appauvri en oxygène depuis la cathode de la cellule électrochimique le long d'un trajet d'écoulement de gaz d'inertage vers l'espace protégé ; **caractérisé par**
un fonctionnement dans des modes de fonctionnement alternatifs, comportant :
un premier mode dans lequel de l'eau est dirigée vers l'anode, de l'énergie électrique est dirigée depuis une source d'alimentation vers la cellule électrochimique pour fournir une différence de tension entre l'anode et la cathode, et du gaz oxygène est dirigé depuis l'anode vers le dispositif respiratoire d'occupant d'aéronef, et
un second mode dans lequel de l'hydrogène est dirigé depuis une source d'hydrogène vers l'anode, de l'énergie électrique est dirigée depuis la cellule électrochimique vers un collecteur d'énergie, et du gaz oxygène est dirigé depuis un réservoir de stockage d'oxygène vers le dispositif respiratoire d'occupant d'aéronef.

8. Procédé selon la revendication 7, dans lequel le dispositif respiratoire d'occupant d'aéronef comprend un masque respiratoire comportant une cavité en communication fluidique avec le gaz oxygène transféré depuis l'anode.

9. Procédé selon la revendication 7 ou 8, comprenant en outre la régulation d'une pression du gaz oxygène, et/ou comprenant en outre l'élimination d'eau du gaz oxygène, et/ou comprenant en outre la commande d'une température ou de l'humidité du gaz oxygène, et/ou comprenant en outre le transfert de gaz oxygène depuis l'anode vers un réservoir de stockage de gaz oxygène et le transfert de gaz oxygène depuis le réservoir de stockage de gaz oxygène vers le dispositif respiratoire d'occupant d'aéronef, et/ou comprenant en outre la fourniture d'air comprimé depuis un système de contrôle environnemental vers une zone d'occupant de l'aéronef.

10. Procédé selon la revendication 7, comprenant en outre le fonctionnement dans le premier mode dans des conditions de fonctionnement d'aéronef normales, et le fonctionnement dans le second mode en réponse à une demande d'énergie électrique d'urgence.
